Europäisches Patentamt

European Patent Office

Office européen des brevets

(19)

(11) Numéro de publication : **0 113 637 B2**

(12) # NOUVEAU FASCICULE DE BREVET EUROPEEN

(45) Date de publication du nouveau fascicule du brevet : **11.03.92 Bulletin 92/11**

(51) Int. Cl.⁵ : **A22C 17/00**

(21) Numéro de dépôt : **83420177.4**

(22) Date de dépôt : **24.11.83**

(54) Machine pour la fabrication automatique de brochettes de viandes, de légumes ou autres.

(30) Priorité : **13.12.82 FR 8221153**
**18.10.83 FR 8316928**

(43) Date de publication de la demande :
**18.07.84 Bulletin 84/29**

(45) Mention de la délivrance du brevet :
**22.04.87 Bulletin 87/17**

(45) Mention de la décision concernant
l'opposition :
**11.03.92 Bulletin 92/11**

(84) Etats contractants désignés :
**AT BE CH DE GB IT LI NL SE**

(56) Documents cités :
**EP-A- 0 078 232**
**EP-A- 0 098 451**
**FR-A- 2 494 092**
**FR-A- 2 515 023**
**NL-A- 6 813 550**

(56) Documents cités :
**US-A- 3 691 608**
**US-A- 4 056 026**
**Correspondance PALGA/Société Durand**
**Plan No. 3348 00 000**
**Extraits du catalogue Matic 82**
**Témoignages BONNOT et DONJEAN-QUILI-CHINI**
**Meat Industry, janvier 1983, pages 32 et 33**
**Dictionnaire Quillet-Flammarion 1968**
**"Guillotine"**

(73) Titulaire : **Emsens Antoine SARL**
**2 rue Jean Macé**
**F-42490 Fraisses (FR)**

(72) Inventeur : **Emsens, Antoine**
**2 rue Jean Macé**
**F-42490 Fraisses (FR)**

(74) Mandataire : **Dupuis, François**
**Cabinet Laurent et Charras 3 Place de l'Hôtel-de-Ville**
**F-42000 St.Etienne Cédex 1 (FR)**

EP 0 113 637 B2

Jouve, 18, rue Saint-Denis, 75001 PARIS

## Description

L'objet de l'invention se rattache notamment au secteur technique de la mise en forme ou traitement des produits alimentaires.

On connaît des machines conformées pour réaliser le découpage calibré des différentes couches de viandes et/ou de légumes, ainsi que l'embrochement de ces différentes couches. Généralement, ce type de machine présente un panier ou bac dans lequel sont introduites, en rangs superposés, les couches de viandes et/ou de légumes. La base et le couvercle de ce panier sont équipés de guides pour le coulissement des broches destinées à être enfoncées dans les différentes couches, tandis que les parois de ce panier sont pourvues de fentes verticales pour le passage d'une ou de plusieurs lames coupantes.

L'embrochement s'effectue soit manuellement, ce qui est long et pénible, soit d'une manière semi-automatique. Dans ce dernier cas, les moyens proposés à ce jour sont mal adaptés et nécessitent malgré tout une intervention manuelle. De plus, lorsque différentes couches de viandes ou de légumes sont trop dures, les moyens d'embrochement, par leur conformation, ne permettent pas l'enfoncement des broches. On est souvent obligé d'avoir recours à des organes supplémentaires.

Il en résulte un temps de mise en oeuvre relativement long, et une automatisation incomplète.

La coupe des couches de viandes ou de légumes peut s'opérer manuellement ou mécaniquement.

Dans le cas d'une coupe manuelle, l'utilisateur introduit successivement une lame tranchante dans les fentes verticales du panier en exerçant manuellement une forte pression sur la lame, ce qui est long et engendre une fatigue musculaire importante.

Les dispositifs de coupe mécanique comprennent le plus souvent une pluralité de lames coupantes accouplées à un organe moteur pour être soumises simultanément à un mouvement alternatif de va et vient, combiné à un mouvement vertical descendant de l'ensemble du dispositif. Il y a donc nécessairement deux mouvements conjugués, ce qui augmente le coût de fabrication et diminue le rendement.

On a également proposé un embrocheur pour la préparation de brochettes équipé d'un dispositif de coupe conforme pour l'essentiel à ce qui a été indiqué précédemment. Un tel type d'embrocheur correspond à une Demande de Brevet Européen EP-A 0 078 232, dont le dispositif d'embrochement est établi essentiellement à partir de trois plateaux mobiles recevant chacun des tubes coopérant en coulissement et un plateau flottant. Ces différents plateaux sont assujettis à des organes de commande et autres agencements pour être déplacés en hauteur.

Il en résulte une conception technologique relativement complexe, d'un encombrement important, cette complexité influençant d'autre part, d'une manière néfaste, la fiabilité du système et le coût de revient.

De même, la technologie proposée engendre un fonctionnement compliqué qui freine la cadence de production. Par exemple, il n'est pas possible de garnir en totalité, en une seule fois, le panier d'embrochement des différentes couches de viandes et/ou de légumes, mais on est obligé de procéder à un empilage successif de ces différentes couches en actionnant, entre chaque couche, un organe presseur commandé manuellement.

On connaît également la Demande de Brevet Européen EP-A 0 098 451 qui fait état d'une machine pour la préparation de brochettes. Les moyens de mise en oeuvre pour réaliser un embrochement automatique sont compliqués. Par exemple, il est nécessaire d'avoir un ensemble de pointes spécialement adaptées pour réaliser une préperforation des couches de viandes en vue de l'enfoncement ultérieur des broches au fur et à mesure de la remontée desdites pointes. Outre la complexité de ces moyens et du fonctionnement qui en découle, plusieurs organes de commande du type vérin sont nécessaires.

Ces deux demandes de Brevet Européen font partie de l'état de la technique antérieure en vertu de l'article 54, paragraphe 3 de la Convention sur le Brevet Européen. EP-A 0 078 232 a été publiée après la première priorité revendiquée pour la présente invention.

Quant à la coupe des différentes couches de viandes embrochées, cette dernière s'effectue d'une manière manuelle en dehors de la machine. On n'a donc pas un cycle complet d'automatisation.

L'invention s'est fixée pour but, d'une manière particulièrement simple et avantageuse, la réalisation d'une machine qui permet, d'une manière entièrement automatique, ne nécessitant quasiment aucune intervention humaine, si ce n'est le fait de charger et de décharger le panier, à la fois l'embrochement et le découpage de différentes couches de viandes et/ou de légumes en vue de réaliser des brochettes.

L'invention, telle qu'elle est caractérisée dans les revendications, résoud le problème consistant à créer une machine pour la fabrication automatique de brochettes de viandes et/ou de légumes, équipée d'un bac de découpage et d'embrochement recevant les différentes couches de viandes et/ou de légumes, et comprenant en combinaison, montés sur un même bâti :

– une seule plaque support qui reçoit directement ou d'une manière rapportée, un tiroir amovible qui présente en débordement une pluralité de tiges creuses d'un seul type, disposées verticalement et destinées à supporter les broches, lesdites tiges étant positionnées sur le tiroir d'une manière ordonnée, de façon à correspondre à des agencements du bac et, notamment, de façon à coopérer avec des trous d'une guide inférieur conformé en plaque perforée constituant le fond inférieur du bac qui est monté immobile en translation par rapport à celui-ci;

– un organe de commande unique accouplé à la plaque support, provoque le déplacement de ladite plaque, du bas vers le haut et l'enfoncement progressif des broches et des tiges qui lui sont solidaires d'une manière telle, que les broches et les tiges traversent les trous correspondant du guide inférieur immobile en translation, et s'enfoncent à travers les couches de viandes et ou de légumes jusqu'au moment où les broches sont positionnées en butée dans un guide du bac lequel est disposé à la partie supérieure du bac sensiblement parallèlement au guide inférieur ;

– et un ou des dispositifs de coupe accouplés à un moyen de commande en translation horizontale aller et retour en étant monté à coulissement guidé par rapport au bâti et perpendiculairement à l'une au moins des faces du bac munie d'une ou plusieurs ouvertures ou fentes appropriées en vue d'effectuer le tranchage des couches de viandes et/ou de légumes ; les dispositifs d'embrochement et de coupe étant commandés en synchronisme à partir d'un même point de commande.

Les avantages obtenus grâce à cette invention résident essentiellement dans l'automatisation totale de l'embrochement et de la coupe des différentes couches de viandes et/ou de légumes sur une même machine. Une seule personne est nécessaire et suffisante pour faire fonctionner la machine, son travail consistant essentiellement à remplacer d'une part le bac vide par un bac prégarni et, d'autre part, le tiroir recevant les broches. En effet il est possible, pendant le déroulement du cycle de fonctionnement de la machine (embrochement et tranchage des couches de viandes et/ou de légumes), qui s'effectue d'une manière totalement automatique sans aucune intervention manuelle, de garnir plusieurs bacs en viandes et/ou légumes et d'équiper en broches plusieurs tiroires. On souligne également la simplicité de réalisation, et le coût de revient réduit

L'invention est exposée ci-après plus en détail à l'aide de dessins représentant seulement un mode d'exécution.

La fig. 1 est une vue de face de la machine.

La fig. 2 est une vue en plan correspondant à la fig. 1 .

La fig. 3 est, à petite échelle, une vue en plan d'une réalisation en variante de la machine.

La fig. 4 est une vue à caractère schématique montrant le dispositif de chargement automatique des broches.

Les fig. 5 à 11 sont des vues de faces et en plan à caractère schématique montrant les différentes phases d'embrochement et de découpage automatiques.

La fig. 12 est une vue de face partielle de la machine, selon une variante de réalisation.

La fig. 13 est une vue en plan et en coupe considérée selon la ligne 13-13 de la fig. 12.

La fig. 14 est, à grande échelle, une vue partielle en coupe d'une tige recevant une broche.

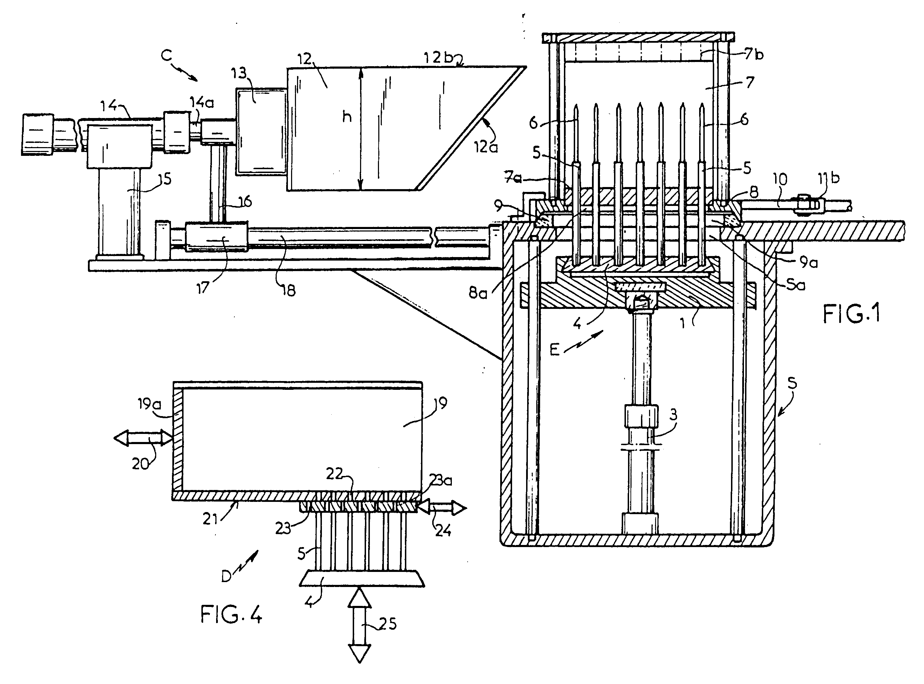

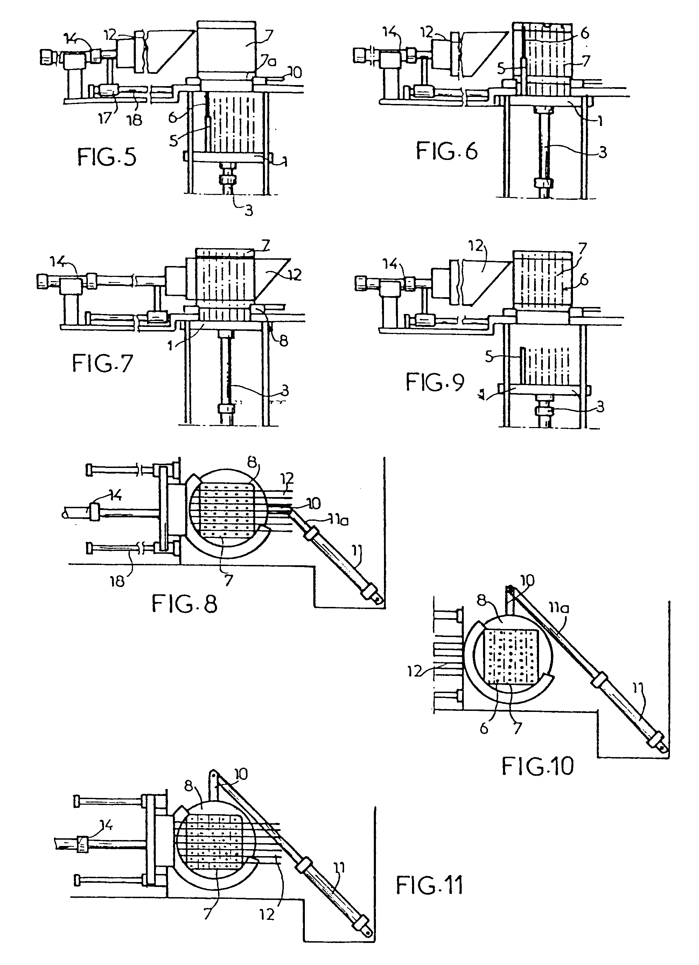

On voit dans fig. 1 que la machine, selon l'invention, comprend en combinaison, montés sur un même bâti support (S), un dispositif d'embrochement automatique (E) et un dispositif automatique de coupe (C). Un dispositif (D) de chargement automatique des broches (fig. 4) est monté sur le bâti (S) ou est indépendant de ce dernier.

Le dispositif d'embrochement (E) met en oeuvre une plaque support (1) montée à coulissement libre et guidé sur des colonnes verticales (2) que présente le bâti (S). Cette plaque (1) est accouplée à la tige d'un vérin (3) à double effet, pour être déplacée verticalement le long des colonnes de guidage (2).

Un tiroir amovible (4) est logé directement ou d'une manière rapportée dans l'épaisseur de la plaque (1) en étant agencé pour permettre le positionnement et le guidage des broches. Par exemple, le tiroir (1) présente en débordement une pluralité de tiges creuses (5) disposées verticalement. Ces tiges sont destinées à recevoir les broches (6) et sont positionnées sur le tiroir (4), d'une manière ordonnée de façon à correspondre aux agencements du bac (7) conformé pour recevoir les différentes couches de viandes et/ou de légumes devant être embrochées puis découpées. La longueur des tiges est inférieure à celle des broches.

Dans ce but, le bac (7) est monté sur une partie du bâti support (S) en étant positionnée axialement à l'ensemble porte-tiges (5). Par exemple, le bac (7) est fixé d'une manière démontable sur une base ou plateau d'appui (8) présentant axialement une ouverture (8a) pour le passage de l'ensemble des tiges (5), ladite ouverture étant formée concentriquement à une ouverture correspondante (Sa) du bâti.

Comme il est indiqué dans la suite de la description, le plateau d'appui (8) est monté sur le bâti d'un manière fixe ou d'une manière tournant en fonction des moyens de mise en oeuvre du dispositif de coupe.

D'une manière connue, la partie inférieure du bac (7) présente un guide (7a) percé d'une pluralité de trous en nombre correspondant au nombre des broches (6) pour le guidage linéaire de l'ensemble tiges (5) - broches (6). La partie supérieure opposée du bac reçoit un guide (7b) pour le positionnement des extrémités pointues des broches (6). Les parois du bac (7) sont munies d'une pluralité de fentes verticales pour le passage des couteaux

Lorsque le plateau d'appui (8) est monté tournant, ce dernier est centré sur une bague circulaire de friction (9) positionnée fixement sur le bâti. De la même façon que la base d'appui (8), la bague (9) présente une ouverture axiale (9a) pour le passage de l'ensemble tiges-broches. Il en résulte donc que le bac (7) est susceptible d'être animé d'un mouvement circulaire.

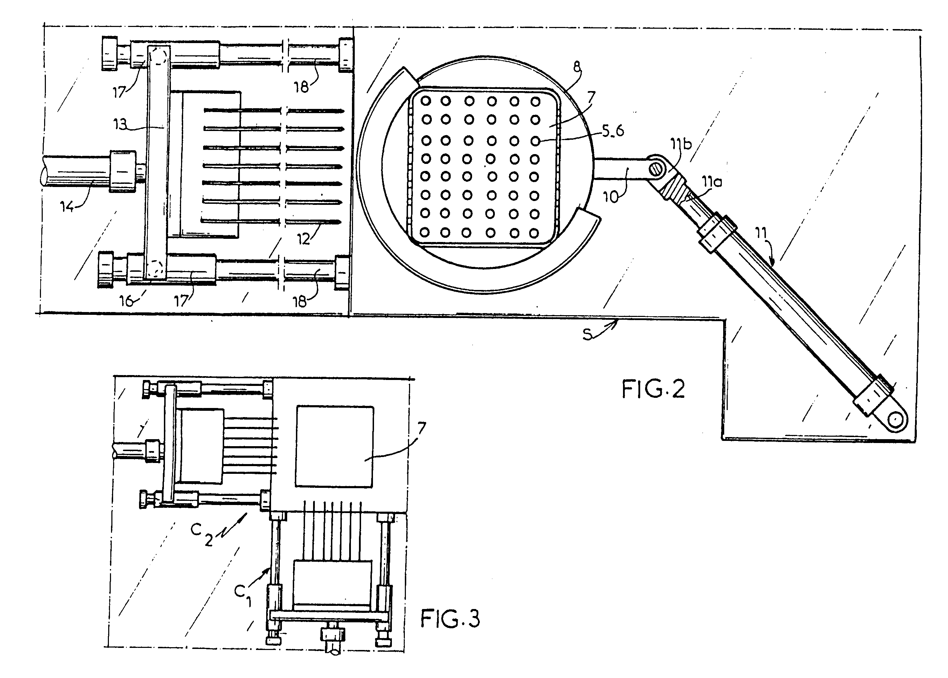

Selon l'invention, on a voulu indexer en rotation le plateau (8) suivant un déplacement circulaire de très sensiblement 90°. Dans ce but, la périphérie du plateau (8) présente en débordement un doigt (10) disposé axialement au dispositif de coupe (fig. 2). En bout de ce doigt est accouplé, à libre rotation, l'extrémité libre de la tige (11a) d'un vérin (11). Par exemple, l'extrémité de la tige du vérin présente une chape (11b) dans laquelle est articulé le doigt (10). Le fût du vérin est disposé angulairement sur le bâti (S) en y étant fixé à son extrémité libre d'une manière articulée , dans un plan horizontal. Il en résulte donc que lorsque le vérin (11) est actionné, la tige (11a) de ce dernier crée sur le doigt (10) une force de poussée qui fait pivoter circulairement le plateau (8) et le bac (7), jusqu'à une position de butée qui correspond à un déplacement circulaire de 90° de l'ensemble plateau-bac.

On souligne qu'en position d'indexation à 90° du plateau, une butée de fin de course (non représentée) peut agir sur le vérin (11) en vue de couper son alimentation. Le vérin (11) est convenablement positionné angulairement sur le bâti-support (S), de façon à ce que la tige (11a), lors de son déplacement, ne vienne pas en contact avec l'ensemble du plateau et du bac (7) (fig. 10).

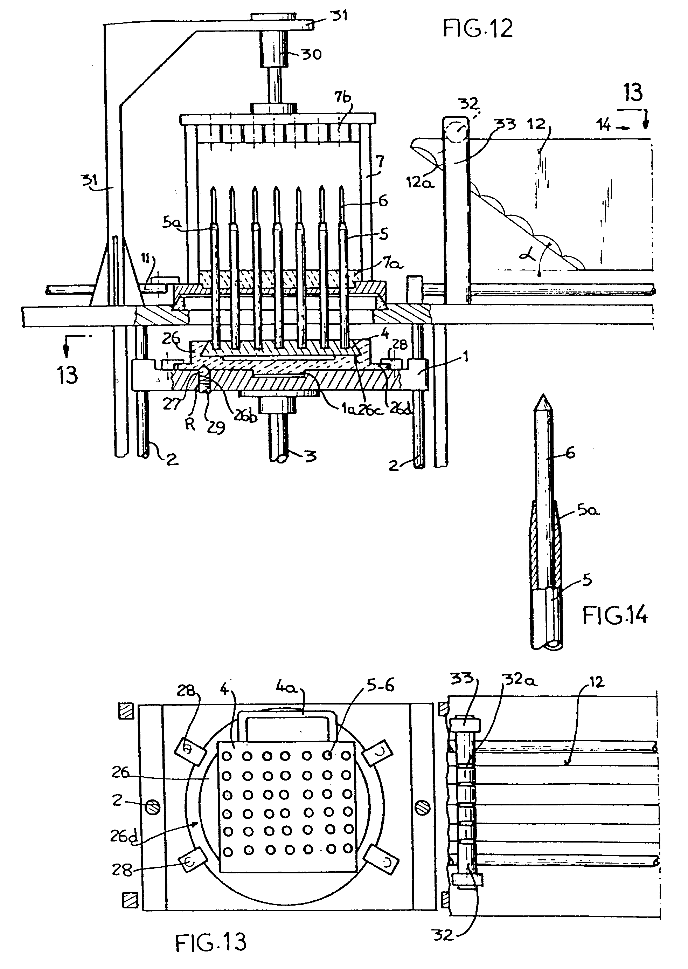

Le tiroir (4) recevant les tiges (5) est, d'une manière préférée, logée d'une manière amovible dans une embase (26) montée libre en rotation sur la plaque support (1) qui coulisse le long des colonnes de guidage (2) (fig. 12).

Par exemple, la face de dessous de l'embase (26) présente en débordement, une portée circulaire de centrage (26a) qui coopère dans un logement correspondant (1a) de la plaque (1). De plus, l'embase (26) est indexée en rotation par tout moyen connu et appropriée telle qu'une bille (27) engagée partiellement dans un trou (26b) de l'embase, en étant rappelée constamment en position par un ressort (R) assujetti à une vis de pression (29).

Le tiroir (4) avec une poignée de préhension (4a) est monté coulissant dans une rainure en queue d'aronde (26c) formée dans l'épaisseur de l'embase (26).

L'embase (26) présente une semelle circulaire (26d) coopérant avec des éléments (28) faisant office de bride pour assurer le blocage en hauteur de ladite embase tout en permettant sa libre rotation (fig. 13).

On conçoit donc que l'ensemble du tiroir (4) équipé des tiges (5) et des broches (6) est susceptible d'être entraîné en rotation partielle concomitamment avec le bac (7) lorsque les tiges et les broches sont engagées dans le guide (7a) dudit bac. Ces dispositions s'avèrent particulièrement importantes pour la réalisation des brochettes selon l'invention en supprimant tous risques de casse des broches (6) lors de la pénétration des couteaux.

Le dispositif de tranchage (C) est monté à coulissement libre et guidé sur le bâti (S) en étant disposé en regard de l'une des faces verticales du bac (7), et dans un plan perpendiculaire au dispositif d'embrochement décrit ci-dessus.

Le dispositif (C) comprend un ensemble de couteaux (12) dont le nombre correspond à celui des fentes du bac (7). La partie arrière des couteaux (12) est solidaire d'un bloc d'accouplement (13) qui est relié à la tige (14a) d'un vérin à double effet (14) en vue d'appliquer à l'ensemble du bloc porte-couteau, un mouvement de translation horizontale aller et retour. Dans l'exemple de montage illustré, le vérin est fixé dans un étrier (15) tandis que le bloc porte-couteaux (13) présente à proximité de ses bords latéraux, des colonnes (16) qui coopèrent, par l'intermédiaire de manchon (17), avec des tiges de guidage horizontal (18) montées sur le bâti (S).

D'une manière particulièrement intéressante, la partie tranchante (12a) de la lame des couteaux (12) est biseautée, et la hauteur (h) de cette lame correspondant au moins à la distance entre les guides supérieur (7a) et inférieur (7b) du bac d'embrochement (7). La longueur des lames est fonction des dimensions du bac (7). Le tranchant (12a) de chacune des lames est biseauté de façon que le côté horizontal (12b) de plus grande longueur est situé en partie haute.

L'angle ($\alpha$) de coupe est de l'ordre de 36°. Le tranchant (12a) est très légèrement dentelé.

On conçoit donc que lorsque le vérin (14) est actionné, l'ensemble des lames (12) pénètre progressivement dans les différentes couches de viandes et/ou de légumes en vue de les trancher en une seule opération.

Il convient maintenant d'expliquer le fonctionnement de la machine selon l'invention en se référant plus particulièrement aux fig.5 à 11 des dessins.

Après avoir mis en place le tiroir (4) de la plaque (1), notamment dans l'embase (26), les broches (6) étant engagées dans les tiges creuses (5), la pointe dirigée vers le haut, on garnit le bac (7) des différentes couches (non représentées) de viandes et/ou de légumes et on maintient fermement le guide supérieur (7b) dudit bac. On indexe en rotation l'embase (26) pour que les différentes rangées de tiges-broches se trouvent positionnées perpendiculairement et parallèlement aux couteaux (12) (fig. 5).

On actionne le vérin (3) dont la tige pousse l'ensemble de la plaque (1), ce qui a pour effet de provoquer l'enfoncement progressif des broches (6) et des tiges (5) dans les différentes couches de viandes et/ou de légumes, jusqu'au moment où les broches (6) sont positionnées en butée dans le guide (7b) du bac (7). Le vérin (3) est stoppé (figure 6).

Le vérin (14) du dispositif de coupe est actionné pour provoquer le déplacement en translation du bloc porte-couteaux (12) dont les lames pénètrent progressivement dans les différentes couches de viandes et/ou de légumes en vue de les trancher en totalité en un seul mouvement. L'ensemble des tiges et des broches demeure enfoncé dans les différentes couches, les lames de couteaux passant dans ce cas entre l'ensemble desdites tiges et des broches (fig. 7 et 8). La tige (14a) du vérin (14) est rappelée en position de dégagement des lames (12).

On actionne alors le vérin (11) permettant l'indexation à 90° du plateau et du bac (7), en vue d'une seconde coupe dans les couches de viandes ou de légumes embrochées, perpendiculaire à la première coupe en agissant sur le vérin (14) pour le déplacement en translation du bloc porte-couteaux (12).

Concomitamment à la rotation du bac (7), l'embase (26) avec le tiroir (4) recevant les tiges (5) et les broches (6), est également entraînée en rotation étant donné que les tiges (5) - broches (6) sont demeurées enfoncées dans les différentes couches de viandes et/ou de légumes.

La tige (14a) du vérin (14) est rappelée en position de dégagement des lames (12a), le vérin (3) étant actionné en sens inverse pour rabaisser la plaque (1) et l'ensemble de l'embase (26) avec le tiroir (4) équipé des tiges creuses de guidage (5), les broches (6) demeurant enfoncées dans les couches découpées de viandes et/ou de légumes (fig.9). Il suffit ensuite de démonter le bac pour retirer les brochettes.

On souligne que dans le cas où le tiroir (4) est monté directement dans la plaque-support (1), c'est-à-dire non asservi en rotation sous l'effet du déplacement en rotation du bac (7), après le premier tranchage, la tige (14a) du vérin (14) est rappelée en position de dégagement des lames (12a), le vérin (3) étant, si ce n'est déjà fait, actionné en sens inverse pour rabaisser la plaque (1) et l'ensemble des tiges creuses de guidages (5), les broches (6) demeurant enfoncées dans les couches découpées de viandes et/ou de légumes (figure 9). On actionne alors le vérin (11) permettant l'indexation à 90° du plateau et du bac (7) (figure 10), en vue du second tranchage dans les couches de viandes et/ou de légumes embrochées, perpendiculaire au premier tranchage. Il suffit pour cela d'agir sur le vérin (14) en vue du déplacement en translation du bloc porte-couteaux (12).

Le vérin (14) est ensuite ramené, comme précédemment, en position d'effacement, ce qui permet de démonter le bac (7) et d'enlever les brochettes.

Il est bien évident que les différents vérins sont commandés en synchronisme, à partir d'un seul point de commande, en étant asservi à des capteurs de position. On prévoit pour maintenir fermement le guide supérieur (7b) du bac (7), lors de l'enfoncement des tiges-broches, d'assujettir ledit guide à un dispositif de mise en pression au moyen notamment d'un vérin (30) monté verticalement en bout d'une potence (31) solidaire du bâti de la machine. Le fût du vérin (30) est monté à libre rotation sur la potence pour pivoter circulairement lors de la rotation du bac (7) (fig. 12).

L'ensemble des lames de couteaux (12) est guidé en translation pour correspondre en alignement aux différentes fentes verticales du bac (7). Par exemple, la partie supérieure des lames (12) coopère avec des gorges annulaires (32a) formées périphériquement sur un rouleau (32) monté à libre rotation entre deux flasques (33).

Comme le montre la fig. 3, l'extrémité (5a) des tiges (5) recevant les broches (6) est légèrement effilée en bout pour faciliter leur pénétration dans les différentes couches de viandes et/ou de légumes.

D'une manière particulièrement avantageuse, la machine selon l'invention est équipée d'un dispositif permettant le chargement automatique des broches (6) dans les tiges de guidage (5) que présente en débordement le tiroir amovible (4).

Dans ce but, un nombre important de broches (6) est disposé dans un caisson (9), les têtes desdites broches étant positionnées en direction du haut. On réduit alors le volume interne du caisson, au moyen d'un vérin (20) qui pousse l'un des côtés transversaux (19a) dudit caisson (19). On agit alors sur la commande d'un bol vibrant (21) disposé à la base du caisson (19), ce qui a pour effet de positionner un certain nombre de broches dans des trous (22) que présente la base du caisson. Ces trous sont obturés temporairement par un tiroir (23) percé de part en part d'une pluralité de trous (23a) en nombre correspondant avec les trous (22). Ce tiroir (23) est asservi à un vérin double effet (24) pour être commandé en translation en vue d'obturer ou de libérer les trous (22).

Le tiroir (4) prééquipé des tiges creuses (5) est positionné automatiquement en regard des trous (23a) du tiroir (23) et à proximité de ces derniers. Le tiroir (4) peut par exemple être commandé en hauteur au moyen d'un vérin (25).

Le tiroir (23) est alors déplacé en translation par le vérin (24) de façon à mettre en correspondance les trous (22 et 23a). Le tiroir (4) continue à monter et se charge automatiquement des broches (6) qui tombent par gravitation dans les tiges (5) du tiroir (4). Le vérin (25) est actionné ensuite en sens inverse pour rabaisser le tiroir (4) qui est garni en totalité des broches (6). Le vérin (24) ramène le tiroir (23) en position d'obturation des trous (22) pour recommencer une autre opération (fig.4).

Dans une réalisation en variante, le plateau d'appui (8) sur lequel est monté le bac d'embrochement et de découpage (7), est positionné sur le bâti de la machine d'une manière fixe. La machine présente dans ce cas, deux dispositifs de coupe (C1 et C2) (fig. 3), conformés comme indiqué précédemment. Ces deux dispositifs sont donc montés à coulissement libre et guidé sur le bâti (1), en étant disposés à 90° l'un par rapport à l'autre, pour coopérer avec deux faces en équerre du bac (7) d'embrochement.

Le fonctionnement de la machine demeure très sensiblement le même que celui indiqué précédemment, les deux dispositifs de coupe étant mis en fonctionnement l'un après l'autre après l'embrochement des différentes couches de viandes et/ou de légumes.

D'une manière particulièrement avantageuse, on souligne que, selon l'invention, il est possible de garnir à l'avance plusieurs tiroirs (4) équipés en débordement des tiges guides creuses (5). Il en résulte que, dès que le cycle est terminé, c'est-à-dire que les couches de viandes et/ou de légumes sont embrochées puis découpées, il suffit de retirer le tiroir (4) de positionnement et de guidage des broches et de les remplacer par un tiroir prégarni en broches, en même temps que l'on remplit le bac (7) d'autres couches de viandes et/ou de légumes. On réalise donc une séquence continue de fabrication sans pratiquement aucune interruption.


**Revendications**

1. Machine pour la fabrication automtique de brochettes de viandes et/ou de légumes, équipée d'un bac (7) de découpage et d'embrochement recevant les différentes couches de viandes et/ou de légumes, et comprenant en combinaison, montés sur un même bâti (S) :

    – une seule plaque support (1) qui reçoit directement ou d'une manière rapportée, un tiroir amovible (4) qui présente en débordement une pluralité de tiges creuses (5) d'un seul type, disposées verticalement et destinées à supporter les broches (6), lesdites tiges (5) étant positionnées sur le tiroir (4) d'une manière ordonnée, de façon à correspondre à des agencements du bac (7) et, notamment, de façon à coopérer avec des trous d'un guide inférieur (7a) conformé en plaque perforée constituant le fond inférieur du bac qui est monté immobile en translation par rapport à celui-ci ;

    – un organe de commande unique (3) accouplé à la plaque support (1), provoque le déplacement de ladite plaque, du bas vers le haut et l'enfoncement progressif des broches (6) et des tiges (5) qui lui sont solidaires d'une manière telle, que les broches (6) et les tiges (5) traversent les trous correspondant du guide inférieur (7a) immobile en translation, et s'enfoncent à travers les couches de viandes et ou de légumes jusqu'au moment où les broches (6) sont positionnées en butée dans un guide (7b) du bac (7) lequel est disposé à la partie supérieure du bac sensiblement parallèlement au guide inférieur (7a) ;

    – et un ou des dispositifs de coupe (C) accouplés à un moyen de commande en translation horizontale aller et retour en étant monté à coulissement guidé par rapport au bâti (S) et perpendiculairement à l'une au moins des faces du bac (7) munie d'une ou plusieurs ouvertures ou fentes appropriées en vue d'effectuer le tranchage des couches de viandes et/ou de légumes ; les dispositifs d'embrochement et de coupe étant commandés en synchronisme à partir d'un même point de commande.

2. Machine selon la revendication 1 où le bac (7) est fixé d'une manière démontable sur un plateau d'appui (8) présentant axialement une ouverture (8a) pour le passage de l'ensemble des tiges (5) et des broches (6), ladite ouverture (8a) étant formée concentriquement à une ouverture correspondante (8a) que présente le bâti (S).

3. Machine selon la revendication 2, où le plateau (8) est monté sur le bâti d'une manière tournante, en étant indexé à 90 degrés en rotation, la périphérie du plateau (8) présentant en débordement un doigt (10) disposé axialement au dispositif de coupe, l'extrémité libre dudit doigt étant accouplée à libre rotation à la tige d'un vérin (11) dont le fût est disposé angulairement sur le bâti en y étant fixé d'une manière articulée dans un plan horizontal de sorte que, sous l'effet de la poussée exercée par la tige du vérin (11), l'ensemble plateau (8) - bac (7) pivote circulairement de 90 degrés jusqu'à une position de butée.

4. Machine selon les revendications 1 et 3 ensemble, où le tiroir amovible (4) est monté coulissant dans un logement d'une embase (26) conformée pour être libre en rotation sur la plaque support (1) coulissante, de sorte que l'ensemble dudit tiroir (4) avec les tiges et les broches, est susceptible d'être entraîné en rotation avec le bac (7), d'une manière concomitante, lorsque lesdites tiges creuses (5) et broches (6) sont enfoncées dans les différentes couches de viandes et/ou de légumes, ladite embase étant indéxée en rotation.

5. Machine selon l'une quelconque des revendications 1 à 4, où le dispositif de coupe ou tranchage (C) comprend un ensemble de couteaux (12) dont la partie arrière est solidaire d'un bloc d'accouplement (13) qui est relié à la tige d'un vérin (14) à double effet en vue d'appliquer à l'ensemble du bloc porte-couteaux, un mouvement de translation horizontal aller et retour, la partie tranchante (12a) de la lame de couteaux (12) étant biseautée de façon que le côté horizontal de plus grande longueur est situé en partie haute, la hauteur (h) de cette lame étant un moins égale à la distance entre les guides (7a et 7b) du bac (7).

6. Machine selon la revendications 5, où l'ensemble des lames de couteaux (12) est guidé en translation pour correspondre en alignement aux différentes fentes verticales du bac (7).

7. Machine selon la revendication 1, où le guide supérieur (7b) du bac (7) est assujetti à un dispositif de mise en pression au moyen d'un vérin (30) monté verticalement, à libre rotation, sur une potence (31) solidaire du bâti de la machine.

8. Machine selon la revendication 2, où le plateau (8) est monté sur le bâti (S) d'une manière fixe, ladite machine présentant, dans ce cas, deux dispositifs de coupe ou tranchage (C1 et C2) situés dans un plan perpendiculaire au dispositif d'embrochement et disposés à 90 degrés l'un par rapport à l'autre pour coopérer avec deux faces en équerre du bac (7) d'embrochement.

9. Machine selon la revendication 1, où l'extrémité (5a) des tiges (5) est effilée en bout pour faciliter leur pénétration dans les différentes couches de viandes et/ou de légumes.

10. Machine selon la revendication 1, qui est équipée d'un dispositif permettant le chargement automatique des broches (6) dans les agencements correspondant du tiroir (4).

11. Machine selon la revendication 10, où ledit dispositif de chargement comprend un caisson (19) dans lequel sont disposées les broches (6), les têtes étant dirigées vers le haut ; un vérin (20) est accouplé à l'un des côtés transversaux du caisson (19) en vue de réduire son volume tandis qu'un bol vibrant (21), disposé à la base du caisson (19), assure le positionnement d'un certain nombre de broches dans des trous (22) que présente la base du caisson, ces trous étant susceptibles d'êtres obturés temporairement par un organe (23) percé de part en part d'une pluralité de trous (23a) en nombre correspondant avec les trous du caisson, ledit organe (23) étant asservi à un vérin double effet (24) pour être commandé en translation en vue d'obturer ou de libérer les trous (22) ; le tiroir avec les tiges creuses (5) est positionné automatiquement en regard des trous (23a) de l'organe (23) et à proximité de ces derniers, en étant commandé en hauteur au moyen d'un vérin.

**Patentansprüche**

1. Maschine zur automatischen Aufbereitung von Fleischwaren- und/oder Gemüsebrochetten, die mit einem, die verschiedenen Fleischwaren- und/oder Gemüseschichten aufnehmenden Zerschneiden- und Aufspiessenbehälter (7) versehen ist, und die folgenden, in Kombination auf einem einzigen und demselben Gerüst (S) montierten Bauteile aufweist :
– eine einzige Tragplatte (1), die unmittelbar oder in angesetzter Weise eine mit einer Vielzahl vorspringender, in einem einzigen Typ ausgeführten, ausgehöhlten Stangen (5) versehene Schublade (4) aufnimmt, die senkrecht eingerichtet und zum Tragen der Spiesse (6) vorgesehen sind, wobei die genannten Stangen (5) in geordneter Weise auf der Schublade (4) angebracht sind, um mit Ausgestaltungen des Behälters (7) zu entsprechen und insbesondere um mit Bohrungen einer unteren Führung (7a) zusammenzuarbeiten, die als eine durchgebohrte Platte ausgeführt ist, die den unteren Boden des Behälters bildet, und unbeweglich in Verschiebung zu diesem montiert ist ;

– ein mit der Tragplatte (1) gekoppeltes, einziges Antriebsorgan (3), das die Verschiebung der besagten Platte nach oben sowie das schrittweise Absenken der Spiesse (6) und der ihnen zugeordneten Stangen (5) bewirkt, und zwar in der Weise, dass die Spiesse (6) und die Stangen (5) die entsprechenden Bohrungen der verschiebungsunbeweglichen, unteren Führung (7a) durchsetzen, und in die Fleischwaren- und/oder Gemüseschichten hineindringen, bis zum Zeitpunkt, wenn die Spiesse (6) abstützungsweise in einer Führung (7b) des Behälters (7) positioniert werden, wobei diese Führung am oberen Teil des Behälters und in der Hauptsache Parallel an der unteren Führung (7a) eingerichtet ist ;

– und eine oder mehrere mit einem Antriebmittel zur Hin- und Zurückverschiebung in einer waagrechten Richtung gekoppelte oder gekoppelten Zerschneidenvorrichtungen (C), mit verschiebbaren geführten Anordnung zum Gerüst (S) und scheitelrecht zum am wenigstens der einen der Flächen des Behälters (7), die mit einer oder mehreren geeigneten Öffnungen oder Schlitzen zum Aufschneiden der Fleischwaren- und/oder Gemüseshichten versehen ist, wobei die Aufspiessen- und Zerschneidenvorrichtungen im Gleichlauf von demselben Antriebspunkt aus betätigt werden.

2. Maschine nach Anspruch 1, in welcher der Behälter (7) abnehmar auf eine Abstützungsplatte (8) befestig wird, die achsrecht eine Öffnung (8a) zum Durchsetzen hindurch der Gesamtheit der Stangen (5) und der Spiesse (6) aufweist, wobei die besagte Öffnung (8a) konzentrisch zu einer entsprechenden Öffnung (8a) in dem Gerüst (S) gebildet wird.

3. Mzschine nach Anspruch 2, in welcher die Platte (8) in drehbarer Weise auf das Gerüst montiert und um 90 Grade drehgeteilt ist, und der Umfang der genannten Platte (8) einen zur Zerschneidenvorrichtung achsenrecht vorspringend angebrachten Finger (10) aufweist, wobei das freie Ende des besagten Fingers frei drehbar mit der Stange eines Druckzylinders (11) gekoppelt ist, dessen Gehäuse winklig auf dem Gerüst angeordnet und in einer in einer waagrechten Ebeneggelenkiger Weise auf dem besagten Gerüst befestigt wird, sodass unter der von der Stange des Druckzylinders (11) ausgeübten Schubwirkug der durch die Platte (8) und den Behälter (7) gebildete Komplex kreisartig um 90 Grade bis zu einer Abstützungsstellung verschwenkt sird.

4. Maschine nach Ansprüchen 1 und 3 zusammen, in welcher die abnehmbare Schublade (4) verschiebbar in ein Gehäuse eines Bodenteils (26) montiert ist, die für freie Drehbewegung auf die verschiebbare Tragplatte (1) vorgesehen ist, damit der Komplex der besagten Schublade zusammen mit den Stangen und Spiessen drehbar und gleichzeitig mit dem Behälter (7) angetrieben werden kann, wenn die besagten ausgehöhlten Stangen (5) und die Spiesse (6) in die verschiedenen Fleischwaren- und Gemüschichten hineingesteckt werden, wobei der genannte Bodenteil drehgeteilt ist.

5. Maschine nach einem der Ansprüche 1 bis 4, in welcher die Zerschneiden- oder Zerstückelungsvorrichtung (C) einen Komplex von Messern (12) aufweist, dessen rückwärtiger Teil einem Küpplungsblock (13) zugeordnet ist, der mit der Stange eines doppelwirkenden Druckzylinders (14) verbunden ist, um dem gesamten Messertragblock eine waagrechte Hin- und Hervorschubbewegung zu verleihen, wobei der schneidende Teil (12a) der Klinge der Messer (12) abgeschrägt ist, damit die waagrechte Seite von grösserer Länge im Oberteil zu liegen kommt, indem die Höhe (h) dieser Klinge am wenigstens die gleiche wie der Abstand zwischen den Führungen (7a) und (7b) des Behälters (7) ist.

6. Maschine nach Anspruch 5, in welcher der Komplex der Klingen der Messer (11) verschiebungsartig zum Entsprechenden Ausrichten mit den senkrechten Schlitzen des Behälters (7) geführt wird.

7. Maschine nach Anspruch 1, in welcher die obere (7b) des Behälters (7) von einer Druckansteuerungsvorrichtung mittels eines Druckzylinders (30) abhängig ist, der frei drehbar auf einen dem Gerüst der Maschine zugeordneten Ausleger (31) der Maschine senkrecht montiert wird.

8. Maschine nach Anspruch 2, in welcher die Platte (8) in feststehender Weise auf dem Gerüst (S) montiert ist, und die besagte Maschine, in diesem Fall, zwei Zerschneiden- oder Zerstückelungsvorrichtungen (C1 und C2) in einer zur Aufspiessenvorrichtung scheitelrechten Ebene aufweist, wobei diese zweie Zerschneidenvorrichtungen um einen Winkel von 90 Graden zueinander angeordnet sind, um mit den zweien rechtwinkligen Flächen des Aufspiessenbehälters (7) zusammenarbeiten zu können.

9. Maschine nach Anspruch 1, in welcher das Ende (5a) der Stangen (5) zum Erleichtern des Durchdringens dieser Stangen in die verschiedenen Fleischwaren- und/oder Gemüseschichten hindurch endweise zugespitzt ist.

10. Maschine nach Anspruch 1, die mit einer Vorrichtung zur automatischen Beschickung der Spiesse (6) in die entsprechenden Ausgestaltungen der Schublade (4) ausgestattet ist.

11. Maschine nach Anspruch 10, in welcher die genannte Beschickungsvorrichtung einen Kasten (19) aufweist, in welchem die Spiesse (6) mit nach oben zeigenden Köpfen eingerichtet sind, und mit einem der einen der Querseiten des Kastens (19) zum Reduzieren dessen Rauminhalts verkuppelten Druckzylinder (20), während eine am unteren Teil des Kastens (19) vorgesehene Schwingungsschale (21) die Positionierung einer Anzahl von Spiessen in die am unteren Teil des Kastens befindlichen Bohrungen (22) bewirkt, und die genannten Bohrungen mittels eines durch die gleiche Anzahl von Löchern (23a) wie die der Bohrungen (22) durchgebohrten Organs (23) vorläufig verschlossen werden können, wobei das gennante Organ (23) zum Verschiebungsantrieb für das Schliessen oder das Freimachen der Bohrungen (22) von einem doppelwirkenden Druckzylinder (24) angesteuert wird und die Schublade mit den ausgehöhlten Stangen (5) automatisch den Löchern (23a) entgegengesetzt und in der Nähe dieser Löcher des Organs (23) positioniert wird und mittels eines Druckzylinders höhenverstellbar ist.

## Claims

1. Machine for the automatic production of meat and/or vegetables brochettes, fitted with a vessel (7) for the carving up and spitting on operations, accommodating the various layers of meats and/or vegetables, and including in combination, mounted on a common framework (S) :

   – a single supporting plate (1) which receives directly or in an inserted manner a detachable drawer (4) provided with a plurality of projecting hollow rods (5) of the same type, disposed vertically for supporting the spits (6), said rods (5) being disposed on the drawer (4) in the proper order for matching the arrangements of the vessel (7) and more particularly for co-operating with the holes of a lower guiding means (7a) formed as a perforated plate constituting the lower bottom of the vessel which is mounted stationary in translation relative to said guiding means ;

   – a single control organ (3), which is coupled to the supporting plate (1) for causing said plate to be shifted upwardly together with the gradual lowering of the spits (6) and of the rods (5) integral with them so that the spits (6) and the rods (5) will be passed throught the corresponding holes of the lower guiding means (7a) stationary in translation, and will be driven in through the layers of meats and/or of vegetables up to the moment when the spits (6) are positioned in abutment within a guiding means (7b) of the vessel (7), which is disposed in the upper portion of the vessel substantially parallel to the lower guiding means (7a) ;

   – and one or more cutting means (C) coupled to a driving means for horizontal reciprocating translation which is mounted for guided sliding relative to the framework (S) and normal to at least one of the faces of the vessel (7) provided with one or more openings or slots which are suitably made for the slicing of the layers of meats and/or of vegetables, the spitting on and carving devices being controlled in synchronism from t e same point of control.

2. Machine as claimed in Claim 1, wherein the vessel (7) is secured in a detachable manner onto an abutment plate (8) which is provided axially with an opening (8a) for the passage therethrough of the assembly of the rods (5) and spits (6), said opening (8a) being formed concentrically to a corresponding opening (8a) provided in the framework (S).

3. Machine as claimed in Claim 2, wherein the plate (8) is mounted on the framework in a rotary manner, while being indexed by 90 degrees in rotation, the periphery of the plate (8) being provided with a projecting finger (10) disposed axially to the cutting device, the free end of said finger being coupled for free rotation to the rod of a pressure cylinder (11) the body of which is disposed at an angle on the framework and being secured thereto in a hinged manner within a horizontal plane, so that, under the effect of the thrust applied by the cylinder rod (11), the plate (8) - vessel (7) assembly will be pivoted with a circular motion by 90 degrees up to an abutment position.

4. Machine as claimed in Claims 1 and together, wherein the detachable drawer (4) is mounted slidably within a housing of a base piece (26) arranged for being freeo for rotation on the sliding supporting plate (1), so that the assembly of the drawer (4) with the rods and the spits might be driven for rotation together with the vessel (7) in a concomitant manner when said hollow rods (5) and said spits (6) are driven in into the various layers of meats and/or of vegeables, said base piece being indexed in rotation.

5. Machine as claimed in any one of Claims 1 through 4, wherein the cutting or slicing device (C) includes an assembly of knives or cutters (12) the rear part of which is integral with a coupling block (13) connected to the rod of a double acting pressure cylinder (14) in order to impart to the cutter-supporting block assembly a reciprocating horizontal movement of translation, the cutting portion (12a) of the blade of the knives or cutters (12) being bevelled so that the longer horizontal side will be situated in upper portion, the height (h) of said blade being at least equal to the distance between the guiding means (7a and 7b) of the vessel (7).

6. Machine as claimed in Claim (5), wherein the assembly of knife-blades (12) is guided for translation in order to correspond in alignment with the various vertical slots of the vessel (7).

7. Machine as claimed in Claim (1), wherein the upper guiding means (7b) of the vessel (7) is monitored by a pressure setting device by means of a pressure cylinder (30) mounted vertically for free rotation on a jib (31) integral with the framework of the machine.

8. Machine as claimed in Claim 2, wherein the plate (8) is mounted on the framework (S) in a fixed manner, said machine being provided in this case with two cutting or slicing devices (C1 and C2) located within a plane normal to the spitting device and disposed at an angle of 90 degrees to one another, in order to co-operate with two squared faces of the spitting on vessel (7).

9. Machine as claimed in Claim 1, wherein the end (5a) of the rods (5) is sharp-pointed to facilitate the penetration thereof into the various lagers of meats or/of vegetables.

10. Machine as claimed in Claim 1, which is provided with a device permitting the automatic loading of the spits (6) within the corresponding arrangements of the drawer (4).

11. Machine as claimed in Claim 10, wherein said loading device includes a chest (19) in which the spits (6) are disposed, the heads being directed upwardly , and wherein a pressure cylinder (20) is coupled to one of the transverse sides of the chest (19) in order to decrease the volume thereof, while a vibrating cup (21) disposed at the bottom of the chest (19) provides for the positioning of a number of spits within holes (22) drilled within the bottom of the chest, said holes being adapted for being obturated temporarily by an organ (23) drilled therethrough with a plurality of holes (23a) in a numer corresponding to the number of the holes of the chest, said organ (23) being monitored by a double acting pressure cylinder (24) in order to be controlled in translation for obturating or mating free the holes (22), the drawer with the hollow rods (5) being positioned automatically opposite the holes (23a) of the organ (23) and adjacent to these holes, while being controlled vertically by means of a pressure cylinder.

FIG.1

FIG.4

EP 0 113 637 B2

FIG.2

FIG.3

11

FIG.5

FIG.6

FIG.7

FIG.9

FIG.8

FIG.10

FIG.11

FIG.12

FIG.14

FIG.13